# EUROPEAN PATENT SPECIFICATION

(11) **EP 3 279 283 B1**
(45) Date of publication and mention of the grant of the patent: **14.01.2026**
(21) Application number: 16772294.1
(22) Date of filing: 16.03.2016
(51) Int. Cl.: C09J 7/24

(54) **ADHESIVE TAPE**
KLEBEBAND
RUBAN ADHÉSIF

(30) Priority: 01.04.2015 JP 2015075201; 02.07.2015 JP 2015133295; 28.12.2015 JP 2015257442
(43) Date of publication of application: 07.02.2018
(73) Proprietor: Nitto Denko Corporation, Ibaraki-shi, Osaka 567-8680 (JP)
(72) Inventor: HARADA, Tomohito, Ibaraki-shi Osaka 567-8680 (JP); CHEN, Bojun, Kaohsiung 806 (TW)
(74) Representative: Grünecker Patent- und Rechtsanwälte PartG mbB
(86) International application number: PCT/JP2016/058292
(87) International publication number: WO 2016/158411

(56) References cited:
- EP-A1- 2 108 686
- EP-A1- 3 075 805
- EP-A1- 3 075 806
- GB-A- 971 558
- JP-A- 2009 249 510
- JP-A- H02 107 684
- JP-A- H11 209 718
- JP-A- S55 127 479
- JP-B1- S 501 584

## Description

### [Technical Field]

The present invention relates to a pressure-sensitive adhesive (PSA) tape comprising a polyvinyl chloride (PVC) film.

### [Background Art]

For its great workability, PSA tape having a PSA layer at least on one face of PVC film (which may be referred to as "PVC adhesive tape" hereinafter) has been widely used in various applications such as electrical insulation, wrapping and protection. Publications of conventional art related to PVC adhesive tape include Patent Documents 1 and 2.

### [Citation List]

### [Patent Literature]

[Patent Document 1] Japanese Patent Application Publication No. H8-259909
[Patent Document 2] Japanese Patent Application Publication No. 2009-249510

JP S55 127479 relates to a pressure-sensitive adhesive body such as a pressure-sensitive adhesive sheet, an adhesive film, or a pressure-sensitive adhesive tape for the purpose of protecting a surface of a metal plate in a normal state or during plastic working.
EP 2 108 686 relates to a pressure-sensitive adhesive (PSA) sheet comprising a PSA layer formed of an aqueous dispersion-type PSA composition applied to a polyvinyl chloride film as a support (backing).

### [Summary of Invention]

### [Technical Problem]

In an example of application of PVC adhesive tape, it is wound around electric wires in a wire harness installed in a vehicle. For such PVC adhesive tape possibly used in a wire harness, it will be meaningful to be lightweight because it may contribute to an increase in fuel efficiency of the resulting vehicle through reduction of its weight. To reduce the weight of PVC adhesive tape, it is effective to make thinner PVC film, for it is a material formed of PVC which has a relatively large specific gravity among plastics. However, when thinner PVC film is used in PVC adhesive tape, in a wire harness wrapped with the PVC adhesive tape, it tends to cause cracking of the PVC adhesive tape at low temperatures.

The present invention has been made in view of such circumstances with an objective to provide a PVC adhesive tape that is less susceptible to cracking at low temperatures even with thinner PVC film.

### [Solution to Problem]

This invention provides a PSA tape comprising a polyvinyl chloride film, wherein the polyvinyl chloride film comprises an elastomer, wherein the elastomer comprises one, two or more species selected among a chlorinated polyethylene, a (meth)acrylic acid ester-butadiene-styrene copolymer, an acrylonitrile-butadiene copolymer, and an ethylene-vinyl acetate copolymer; and wherein the polyvinyl chloride film comprises an aliphatic acid metal salt, wherein the aliphatic acid metal salt content in the polyvinyl chloride film is 0.01% or higher and 0.3% or lower by weight, and wherein the metal forming the aliphatic acid metal salt is selected from the group consisting of Ca and Zn; and a pressure-sensitive adhesive layer placed on at least one face of the polyvinyl chloride film, with the pressure-sensitive adhesive tape having a tensile elongation at break at -20°C of 80 % or higher determined as described in the specification, wherein the pressure-sensitive adhesive layer is formed from a water-dispersed pressure-sensitive adhesive composition, wherein the pressure-sensitive adhesive tape has a grammage of 100 g/m² or less, and wherein the polyvinylchloride film comprises a plasticizer, with the plasticizer accounting for 15% or higher and 35% or lower by weight. The PVC adhesive tape that shows high extensibility even at such a low temperature also shows excellent flexibility at low temperatures. Thus, it may exhibit good low-temperature properties (e.g. a property to prevent cracking at low temperatures).

As the PVC film forming such a PVC adhesive tape, it is preferable to use a species formed of a resin material having a dynamic viscosity of 3000 Pa·s or less. Such a PVC film tends to favorably make a PVC adhesive tape having a large low-temperature tensile elongation at break (typically exhibiting a low-temperature tensile elongation at break of 80 % or higher).

In the PSA tape according to a preferable embodiment, the PVC film has a thickness of 100 µm or less. The art disclosed herein can provide a PVC adhesive tape that shows good low-temperature properties even in an embodiment comprising such a thin PVC film.

The PSA tape disclosed herein shows good low-temperature properties even with thinner PVC film as described above; and therefore, it is suitable in reducing the weight of the PSA tape. The PSA tape has a grammage of 100 g/m² or less, thereby providing a lightweight PSA tape with good low-temperature properties.

In the PSA tape according to a preferable embodiment, the PVC film comprises an elastomer. The PVC film having an elastomer-containing composition tends to favorably make a PSA tape with a large low-temperature tensile elongation at break (typically a PSA tape with a low-temperature tensile elongation at break of 80 % or higher). The elastomer content in the PVC film can be, for instance, 1 to 30 % by weight.

The PVC film typically comprises a plasticizer. The plasticizer content in the PVC film is, 15 % or higher and 35 % or lower by weight. The PVC film having such a composition tends to combine good low-temperature properties and good heat resistance (e.g. thermal degradation resistance).

The PVC film constituting the PVC adhesive tape preferably comprises an aliphatic acid metal salt. The inclusion of the aliphatic acid metal salt in the PVC film tends to increase the heat resistance. As the aliphatic acid metal saltCaand Znare used.

The art disclosed herein can be preferably implemented in an embodiment where the aliphatic acid metal salt content in the PVC film is, for instance, 0.02 % or higher and 0.3 % or lower by weight. The PVC film having such a composition tends to combine good low-temperature properties and good heat resistance (typically thermal degradation resistance).

This description also provides a wire harness that comprises electric wires wrapped with a PSA tape disclosed herein. Such a configuration can bring about good low-temperature properties in the wire harness.

### [Brief Description of Drawings]

Fig. 1 shows a cross-sectional diagram schematically illustrating the constitution of the PSA tape according to an embodiment.
Fig. 2 shows a cross-sectional diagram schematically illustrating the constitution of the PSA tape according to another embodiment.

### [Description of Embodiments]

Preferred embodiments of the present invention are described below. Matters necessary to practice this invention other than those specifically referred to in this description can be understood by a person skilled in the art based on the disclosure about implementing the invention in this description and common technical knowledge at the time the application was filed. The present invention can be practiced based on the contents disclosed in this description and common technical knowledge in the subject field.

The PSA tape disclosed herein comprises a PVC film and a PSA layer placed on one or each face of the PVC film.

### <PVC Film>

The PVC film can be obtained by forming a film from a PVC composition that comprises prescribed ingredients by a known method. The PVC composition here refers to a composition in which PVC is the primary component (i.e. the highest component, possibly a component accounting for more than 50 % by weight). Such a PVC composition can form a PVC film (typically a film formed of a soft PVC resin) that exhibits favorable physical properties as a support substrate (a substrate to support the PSA layer). The PVC content in the PVC film is typically higher than 40 % by weight, or usually suitably 50 % by weight or higher. The art disclosed herein can be preferably implemented in an embodiment where the PVC content in the PVC film is higher than 50 % by weight (typically 55 % by weight or higher, e.g. 60 % by weight or higher by weight).

### (PVC)

The PVC constituting the PVC composition can be various types of polymer whose primary monomer (the primary component among monomers, possibly a monomer accounting for more than 50 % by weight) is vinyl chloride. In other words, the concept of PVC here encompasses copolymers of vinyl chloride and various comonomers as well as vinyl chloride homopolymer. Examples of the comonomers include vinylidene chloride; olefins such as ethylene and propylene (preferably olefins with 2 to 4 carbons); carboxy group-containing monomers such as acrylic acid, methacrylic acid (hereinafter, (meth)acryl is used to comprehensively refer to acryl and methacryl), maleic acid and fumaric acid as well as their acid anhydrides (maleic acid anhydride, etc.); (meth)acrylic acid esters, e.g. esters of (meth)acrylic acid and alkyl alcohols or cycloalkyl alcohols with 1 to 10 carbons; vinyl ester-based monomers such as vinyl acetate and vinyl propionate; styrene-based monomers such as styrene, substituted styrenes (α-methylstyrene, etc.) and vinyl toluene; and acrylonitrile. As the copolymer, a copolymer in which the copolymerization ratio of vinyl chloride is 70 % by weight or greater (more preferably 90 % by weight or greater) is preferable. The PVC can be obtained by polymerizing these monomers by a suitable method (typically a suspension polymerization method).

The average degree of polymerization of the PVC in the PVC composition can be, for instance, 600 to 1800. In view of the balance between the workability (ease of molding) and the strength, etc., a PVC composition having an average degree of polymerization of 800 to 1600 (e.g. 900 to 1500) can be preferably used.

### (plasticizer)

The PVC film in the art disclosed herein typically comprises a plasticizer. As the plasticizer, various materials that are known to plasticized PVC can be used. Examples of the plasticizer include aromatic carboxylic acid esters such as benzoic acid esters (glycol benzoic acid esters), phthalic acid esters, terephthalic acid esters, trimellitic acid esters and pyromellitic acid esters; aliphatic carboxylic acid esters such as adipic acid esters, sebacic acid esters, azelaic acid esters, maleic acid esters and citric acid esters (tributyl acetylcitrate, etc.); polyesters of polycarboxylic acids and polyols; as well as polyether-based polyesters, epoxy-based polyesters (epoxidized vegetable oils such as epoxidized soybean oil and epoxidized linseed oil, epoxidized aliphatic acid alkyl esters, etc.), and phosphoric acid esters (tricresyl phosphate, etc.). For the plasticizer, solely one species or a suitable combination of two or more species can be used.

As the phthalic acid ester (phthalic acid ester-based plasticizer), for instance, a diester of phthalic acid and an alkyl alcohol with 4 to 16 (preferably 6 to 14, typically 8 to 13) carbons can be used. Favorable examples include di-n-octyl phthalate, di-2-ethylhexyl phthalate, diisononyl phthalate and diisodecyl phthalate. Among them, diisononyl phthalate is preferable.

As the terephthalic acid ester (terephthalic acid ester-based plasticizer), for instance, a diester of terephthalic acid and an alkyl alcohol with 4 to 16 (preferably 6 to 14, typically 8 to 13) carbons can be used. A favorable example is bis(2-ethylhexyl) terephthalate.

As the trimellitic acid ester (trimellitic acid ester-based plasticizer), for instance, a triester of trimellitic acid and an alkyl alcohol with 6 to 14 (typically 8 to 12) carbons can be used. Favorable examples include tri-n-octyl trimellitate, tri-2-ethylhexyl trimellitate, triisononyl trimellitate, tri-n-decyl trimellitate and triisodecyl trimellitate.

As the pyromellitic acid ester (pyromellitic acid ester-based plasticizer), for instance, a tetraester of pyromellitic acid and an alkyl alcohol with 6 to 14 (typically 8 to 12) carbons can be used. Favorable examples include tetra-n-octyl pyromellitate, tetra-2-ethylhexyl pyromellitate and tetra-n-decyl pyromellitate.

As the adipic acid ester (adipic acid ester-based plasticizer), for instance, a diester of adipic acid and an alkyl alcohol with 4 to 16 (preferably 6 to 14, typically 8 to 13) carbons can be used. Favorable examples include di-n-octyl adipate, di-2-ethylhexyl adipate and diisononyl adipate.

As the polyester (polyester-based plasticizer), for instance, a polyester can be used, which is obtainable from a polycarboxylic acid (e.g. succinic acid, adipic acid, suberic acid, azelaic acid, sebacic acid, citric acid, phthalic acid, isophthalic acid, terephthalic acid, trimellitic acid, etc.) and a polyol (e.g. (poly)ethylene glycol (with the term "(poly)ethylene glycol" here comprehensively referring to ethylene glycol and polyethylene glycol, the same applies hereinafter), (poly)propylene glycol, (poly)butylene glycol, (poly)hexanediol, (poly)neopentyl glycol, polyvinyl alcohol, etc.). As the polycarboxylic acid, an aliphatic dicarboxylic acid with 4 to 12 (typically 6 to 10) carbons is preferable, with favorable examples including adipic acid and sebacic acid. In particular, in view of the availability and cost, adipic acid is desirable. As the polyol, an aliphatic diol with 2 to 10 carbons is preferable, with favorable examples including ethylene glycol and butylene glycol (e.g. 1,3-butanediol, 1,4-butanediol).

The plasticizer content is 15 % by weight or higher. The plasticizer content can also be 20 % by weight or higher. The plasticizer content is 35 % by weight or lower. From the standpoint of the heat resistance (typically the thermal degradation resistance), etc., it is 35 % by weight or lower (e.g. 30 % by weight or lower).

The amount of the plasticizer used to 100 parts by weight of PVC is, but not particularly limited to, usually suitably 15 to 75 parts by weight, preferably 20 to 60 parts by weight, or more preferably 30 to 50 parts by weight.

The plasticizer content in the PVC film is suitably 1 % or higher and 30 % or lower with the weight of the PVC adhesive tape comprising the PVC film being 100 % by weight. With aging, the plasticizer in the PVC film may undergo molecular diffusion into the PSA layer. Thus, depending on the constitution of the PVC adhesive tape, the plasticizer may be located unevenly, giving rise to unevenness in properties such as adhesive strength at low temperatures, etc. When the amount of the plasticizer used relative to the weight of the PVC adhesive tape (the plasticizer content in the PVC adhesive tape) is in this range, good plasticization effects tend to be favorably combined with inhibition of localization of the plasticizer. The art disclosed herein can be preferably implemented in an embodiment where the plasticizer content in the PVC adhesive tape is 5 % or higher and 25 % or lower by weight (5 % or higher and 23 % or lower by weight).

### (Elastomer)

In a preferable embodiment of the art disclosed herein, the PVC film can comprise an elastomer. The inclusion of the elastomer in the PVC film can inhibit lowering of the properties including the strength at room temperature (e.g. around 25 °C) and lowering of the heat resistance (e.g. the thermal degradation resistance) while increasing the flexibility at low temperatures. Thus, the use of such PVC film can favorably bring about a PVC adhesive tape with a large low-temperature tensile elongation at break. The elastomer content in the PVC film may contribute to an increase in strength of the PVC film.

As the elastomer, various known polymer materials can be used. Examples of the elastomer include a chlorinated polyethylene (CPE), ethylene-vinyl acetate copolymer, (meth)acrylic acid ester-butadiene-styrene copolymer (e.g. methyl methacrylate-butadiene-styrene copolymer), acrylonitrile-butadiene copolymer as well as composites and modified products of these. For the elastomer, solely one species or a combination of two or more species can be used.

As the elastomer included in the PVC film in the art disclosed herein, it is preferable to select a material that is fairly compatible with PVC. This can effectively increase the low-temperature properties of the PVC film and the PVC adhesive tape using the PVC film. From the standpoint of the appearance of the PVC adhesive tape, etc., the elastomer is preferably used in a range of composition (in a range of amount) that produces a fairly miscible state in the PVC film. The miscible state can be assessed, for instance, by observing the PVC as is or in a stretched state (e.g. stretched in the machine direction to about twice its length) for the presence of clouding.

Examples of the elastomer preferably used in the art disclosed herein include a chlorinated polyethylene (e.g. chlorinated polyethylene with a chlorine content of 25 to 50 % by weight, typically 30 to 45 % by weight, preferably 35 to 45 % by weight), (meth)acrylic acid ester-butadiene-styrene copolymer, acrylonitrile-butadiene copolymer (e.g. acrylonitrile-butadiene copolymer with an acrylonitrile content of 15 to 50 % by weight, typically 25 to 45 % by weight, preferably 30 to 40 % by weight), and ethylene-vinyl acetate copolymer (e.g. ethylene-vinyl acetate copolymer with a vinyl acetate content of 30 to 75 % by weight, typically 40 to 70 % by weight, preferably 50 to 65 % by weight).

The elastomer content in the PVC film can be selected so as to obtain desirable effects. Usually, the elastomer content in the PVC film is suitably 0.5 % by weight or higher. From the standpoint of obtaining greater effects, it is preferably 1 % by weight or higher. From the standpoint of the miscibility described above, etc., the elastomer content in the PVC film is usually about lower than 40 % by weight, preferably 35 % by weight or lower, or more preferably 30 % by weight or lower (e.g. 25 % by weight or lower). From the standpoint of facilitating the keeping of balance between the effects of the use of elastomer and other properties, the art disclosed herein can be preferably implemented in an embodiment where the elastomer content in the PVC film is 1 to 20 % by weight (typically 1 to 15 % by weight, preferably 1 to 10 % by weight, e.g. 3 to 8 % by weight).

The elastomer content relative to 100 parts by weight of PVC is usually suitably 1 part by weight or greater. From the standpoint of obtaining greater effects, it is preferably 2 parts by weight or greater. From the standpoint of the miscibility, etc., the elastomer content relative to 100 parts by weight of PVC is usually suitably about 75 parts by weight or less, or preferably 55 parts by weight or less (typically 50 parts by weight or less, e.g. 45 parts by weight or less). In a preferable embodiment, the elastomer content relative to 100 parts by weight of PVC can be 2 to 25 parts by weight (e.g. 5 to 20 parts by weight).

### (Aliphatic Acid Metal Salt)

The PVC film in the art disclosed herein preferably comprises an aliphatic acid metal salt in addition to the PVC and plasticizer. During processing of the PVC film or the PVC adhesive tape or in a use environment of the PSA tape, the PVC in the PVC film is sometimes exposed to physical energy such as heat, UV rays or shearing force and a chemical reaction occurring upon the exposure may cause discoloration or damage to physical, mechanical or electrical properties. By including the aliphatic acid metal salt in the PVC film, the aliphatic acid metal salt may serve as a stabilizer to prevent or inhibit the chemical reaction. The prevention or inhibition of the chemical reaction (typically hydrochloric acid elimination) may advantageously contribute to improve the thermal degradation resistance of the PVC adhesive tape.

As the aliphatic acid metal salt, solely one species or a combination of two or more species can be used among compounds capable of serving as stabilizers of the PVC film. For instance, the aliphatic acid forming the aliphatic acid metal salt can be preferably selected among saturated and unsaturated aliphatic acids (possibly hydroxy aliphatic acids) with 10 to 20 (typically 12 to 18) carbons, such as lauric acid, ricinoleic acid and stearic acid. From the standpoint of the ease of molding and processing of the PVC film, etc., a metal stearate can be preferably used. From the standpoint of reducing temporal changes of the PVC film or the PVC adhesive tape or of their flexibility at a low temperature, a metal laurate can be preferably used. A metal stearate salt and a metal laurate can also be used together. In this embodiment, the ratio of the amount of the metal laurate used to the amount of the metal stearate used can be, for instance, 0.1 to 10 by weight, or it is usually suitably 0.2 to 5 (e.g. 0.5 to 2).

As the metal forming the aliphatic acid metal salt, in view of the recent increasing concern to environmental health, a metal other than lead (lead-free metal) is preferably used. Even in an embodiment using no such lead-containing stabilizer, the art disclosed herein can provide a PVC adhesive tape that shows good heat resistance. As the metal, Ca and Zn are used. In a preferable embodiment, a Ca salt and a Zn salt can be used in combination. In this embodiment, the ratio of the amount of the Zn salt used to the amount of the Ca salt used for instance, by weight, the ratio value can be 0.1 to 10, or it is usually suitably 0.2 to 5 (e.g. 0.5 to 2). The art disclosed herein can be preferably implemented, for instance, in an embodiment including calcium stearate and zinc laurate at an aforementioned weight ratio or in an embodiment including zinc stearate and calcium laurate at an aforementioned weight ratio. It is noted that for an application that allows the use of an aliphatic acid Pb salt, the PVC film can comprise an aliphatic acid Pb salt.

The aliphatic acid metal salt can be used in an amount (when two or more species are used, in a combined amount) that provides an aliphatic acid metal salt content in the PVC film of 0.01 % by weight or higher; from the standpoint of obtaining greater effects, preferably 0.02 % by weight or higher, or more preferably 0.05 % by weight or higher. The maximum aliphatic acid metal salt content is usually suitably 5 % by weight of the PVC film or lower. From the standpoint of the flexibility at low temperatures, etc., it is preferably 3 % by weight or lower, or more preferably 1 % by weight or lower (typically 0.5 % by weight or lower, e.g. 0.3 % by weight or lower).

### (Antioxidant)

The PVC film in the art disclosed herein may comprise an antioxidant in addition to the PVC and plasticizer. The inclusion of the antioxidant in the PVC film may increase the heat resistance (typically the thermal degradation resistance) of the PVC adhesive tape.

As the antioxidant, known materials capable of preventing oxidation can be used. Examples of the antioxidant include phenol-based antioxidants, phosphorous-based antioxidants, sulfur-based antioxidants and amine-based antioxidants. For the antioxidant, solely one species or a combination of two or more species can be used.

Favorable examples of the antioxidant include phenol-based antioxidants such as hindered phenol-based antioxidants. Examples of hindered phenol-based antioxidants include pentaerythritol tetrakis[3-(3,5-di-tert-butyl-4-hydroxyphenyl)propionate] (trade name "IRGANOX 1010" available from Ciba Japan K.K.), octadecyl-3-(3,5-di-tert-butyl-4-hydroxyphenyl)propionate (trade name "IRGANOX 1076" available from Ciba Japan K.K.), 4,6-bis(dodecylthiomethyl)-o-cresol (trade name "IRGANOX 1726" available from Ciba Japan K.K.), triethylene glycol bis[3-(3-tert-butyl-5-methyl-4-hydroxyphenyl)propionate] (trade name "IRGANOX 245" available from Ciba Japan K.K.), bis(2,2,6,6-tetramethyl-4-piperidyl)sebacate (trade name "TINUVIN 770" available from Ciba Japan K.K.) and a polycondensate of dimethyl succinate and 4-hydroxy-2,2,6,6-tetramethyl-1-piperidineethanol (dimethyl succinate-1-(2-hydroxyethyl)-4-hydroxy-2,2,6,6-tetramethylpiperidine polycondensate) (trade name "TINUVIN 622" available from Ciba Japan K.K.). In particular, pentaerythritol tetrakis[3-(3,5-di-tert-butyl-4-hydroxyphenyl)propionate] (trade name "IRGANOX 1010" available from Ciba Japan K.K.), triethylene glycol bis[3-(3 -tert-butyl-5-methyl-4-hydroxyphenyl)propionate] (trade name "IRGANOX 245" available from Ciba Japan K.K.) are preferable.

The amount of the antioxidant used (when two or more species are used, their combined amount) can be an amount that provides an antioxidant content in the PVC film of 0.001 % by weight or higher. From the standpoint of obtaining greater effects, usually, the antioxidant content in the PVC film is suitably 0.005 % by weight or higher, preferably 0.01 % by weight or higher, or more preferably 0.05 % by weight or higher. In a preferable embodiment, the antioxidant content in the PVC film can be 0.1 % by weight or higher, also 0.5 % by weight or higher, or even 1 % by weight or higher (e.g. 1.5 % by weight or higher). The maximum antioxidant content is usually suitably up to 5 % by weight (typically up to 3 % by weight) of the PVC film.

The PVC film in the art disclosed herein may further comprise as necessary known additives that can be used in PVC film (especially in PVC film for PVC adhesive tapes) as far as the effect of the present invention is not significantly impaired. Examples of such additives include colorant such as pigment and dye, stabilizer other than an aliphatic acid metal salt (e.g. an organic tin compound such as dioctyltin laurate), stabilization-aiding agent (e.g. phosphites such as trialkyl phosphite, inorganic compounds such as hydrotalcite and zeolite), photostabilizer, UV-ray absorber, modifier, flame retardant, antistatic agent, antifungal agent and lubricant. These additives can be used in amounts generally employed in the field of PVC film. The PVC film in the art disclosed herein is preferably free of a compound having a plurality of polymerizable functional groups (e.g. (meth)acryloyl groups) in one molecule, such as trimethylolpropane. Such a compound with a plurality of polymerizable functional groups may undergo polymerization upon oxidation, etc., to harden the PVC film, thereby degrading the low-temperature properties.

The PVC film having such a composition can be obtained typically by molding a PVC composition having the corresponding composition into a film form by a method known in the field of thermoplastic resin film. As such known molding methods, for instance, a melt-extrusion molding method (inflation method, T-die method, etc.), melt casting method, and calendering method can be employed. The art disclosed herein can be preferably implemented also in an embodiment using, for the PVC film, a film that has not been subjected to a treatment to purposefully increase the crosslinking of the overall PVC film, with the treatment including addition of a crosslinking agent and irradiation of active energy rays. With such PVC film, the resulting PVC adhesive tape tends to have a large tensile elongation at break at a lower temperature. The level of crosslinking of the PVC film can be assessed by placing 1 g of the PVC film into 10 mL of tetrahydrofuran (THF), mixing the resultant, and visually inspecting dissolution of the PVC film into the THF. Here, the presence of insoluble matter left in the THF confirms the presence of a crosslinked structure purposefully introduced into the PVC film.

As an example, a typical procedure for making a film by a calendering method is outlined below.
(1) Measuring: PVC, plasticizer and other materials used as necessary are weighed out in accordance with the target composition.
(2) Mixing: The respective weighed materials are mixed to prepare a uniform mixture (typically a mixture in a powder form, i.e. a mixed powder).
(3) Kneading: The mixture prepared in (2) above is melted by heat and kneaded with two, three or more kneading rollers (typically metal rollers). It is suitable to set the temperature of the kneading rollers, for instance, at 100 °C to 250 °C (preferably 150 °C to 200 °C).
(4) Calender molding: The kneaded mixture obtained in (3) above is placed in a calender molding machine to mold a PVC film having an arbitrary thickness. The thickness can be controlled by adjusting the gap between calender rolls and/or the speed ratio between the rolls. The speed ratio between the rolls can be adjusted in a range of preferably 1.0 to 1.5, or more preferably 1.1 to 1.4, for instance, 1.2 to 1.3.

The dynamic viscosity of the PVC composition (i.e. the resin material forming the PVC film) is not particularly limited. From the standpoint of facile production of thin PVC film (e.g. less than 100 µm, typically 80 µm or less, in thickness), it is usually advantageous that the PVC composition has a dynamic viscosity of 4000 Pa·s or less (e.g. 3500 Pa s or less). In a preferable embodiment, the PVC composition has a dynamic viscosity of 3000 Pa·s or less (more preferably 2800 Pa·s or less, e.g. 2500 Pa·s or less). The PVC film formed from a PVC composition showing such a dynamic viscosity can favorably make a PVC adhesive tape with a large tensile elongation at break at -20 °C. The dynamic viscosity of the PVC composition can be, for instance, 1000 Pa·s or greater. From the standpoint of the strength of the PVC film, etc., it is usually suitably 1300 Pa·s or greater (e.g. 1500 Pa·s or greater).

Here, the dynamic viscosity of the PVC composition refers to the dynamic viscosity determined by the method described in Examples described later. The dynamic viscosity can be adjusted by selection of components (PVC as well as plasticizer, elastomer and other additives used as necessary) and their ratio. For instance, the dynamic viscosity of the PVC composition has a general tendency to decrease when one, two or more are practiced among the following: the use of a PVC with a lower average degree of polymerization, the use of an elastomer with a lower melt flow rate (MFR), selection of an elastomer more highly miscible with PVC, and the use of a larger amount of plasticizer.

In the PSA tape disclosed herein, the PVC film may constitute the single-layer or plural-layer support substrate formed from the PVC film, or may constitute the support substrate that comprises other layers in addition to the PVC film. In a preferable embodiment, the other layers may be supplemental layers provided to the PVC film surface, such as a print layer, a release layer and a primer layer. Alternatively, the PVC film may constitute the support substrate in an embodiment where the PVC film and other non-PVC resin film are layered. A preferable embodiment is a configuration where the PSA layer is placed on one face of a support substrate formed of a single-layer PVC film.

In the art disclosed herein, the thickness of the support substrate (e.g. support substrate formed of a single-layer PVC film) is typically 500 µm or less, or usually 300 µm or less. From the standpoint of the handling properties of the PVC adhesive tape, etc., it is preferably 200 µm or less, or more preferably 150 µm or less (e.g. 120 µm or less). The art disclosed herein can be practiced in an embodiment using a thin PVC film as the support substrate to favorably produce the effect to prevent cracking at a low temperature. Thinner PVC film tends to be able to thin down the PVC adhesive tape formed by using the PVC film. This can downsize the appearance of a member (e.g. a wire harness) formed using the PVC adhesive tape to reduce the space for installation of the member. Thinner PVC film tends to form a PVC adhesive tape with a smaller grammage. This can reduce the weight of a member (e.g. a wire harness) formed using the PVC adhesive tape. From such a standpoint, it is preferable to use, as the support substrate, a PVC film having a thickness of 100 µm or less (typically less than 100 µm, more preferably 90 µm or less, or yet more preferably 80 µm or less). The support substrate can be a PVC film having a thickness of 75 µm or less. The thickness of the support substrate is typically 10 µm or greater, or usually 25 µm or greater. From the standpoint of the handling properties and the crack resistance, it is preferably 50 µm or greater (e.g. 60 µm or greater). For example, the thickness of the support substrate can be preferably applied to PSA tapes used for protecting and binding electric wires, and pipes; covering corrugated tubes that wrap and protect electric wires; covering bundled electric wires (a bundle of electric wires); electric insulation.

Of the support substrate, the surface to which the PSA layer is placed may be subjected as necessary to heretofore known surface treatments such as corona discharge treatment, plasma treatment, UV-ray irradiation, acid treatment, alkali treatment, primer coating and antistatic treatment. These treatments may be provided to increase the tightness of adhesion between the substrate and PSA layer, that is, the anchoring of the PSA layer to the substrate. The primer composition can be suitably selected from known compositions. The thickness of the primer layer is usually preferably 0.01 µm or greater and 1 µm or less, or more preferably 0.1 µm or greater and 1 µm or less.

In the PVC adhesive tape in an embodiment where the PSA layer is placed solely on one face of the support substrate, for purposes such as increasing the printability, reducing the light reflection and increasing the ease of application in layers, the face (backside) to which no PSA layer is placed may be subjected to treatment such as corona discharge treatment, plasma treatment, UV-ray irradiation, acid treatment and base treatment. The backside of the PVC adhesive tape may be subjected as necessary to heretofore known surface treatments such as release treatment and antistatic treatment. For instance, the back face of the substrate may be provided with a release layer such as long-chain alkyl-based release layer or silicone-based release layer to reduce the unwinding force of the PVC adhesive tape wound in a roll. The PVC adhesive tape disclosed herein can also be preferably made in an embodiment where the backside of the PVC adhesive tape has not been subj ected to release treatment as described above.

### <PSA Layer>

The PSA layer in the art disclosed herein is a layer formed from a material that exists as a soft solid (a viscoelastic material) in a room temperature range and has a property to adhere easily to adherend with some pressure applied. As defined in "Adhesion : Fundamental and Practice" by C. A. Dahlquist (McLaren & Sons (1966), P. 143), the PSA referred to herein is normally a material that has a property satisfying complex tensile modulus E* (1Hz) < 100 kg·m/s²/cm² (10⁷ dyne/cm²) (typically, a material that exhibits the described characteristics at 25 °C).

The PSA layer in the art disclosed herein may be formed from a PSA composition in various forms, such as a water-dispersed PSA composition, aqueous PSA composition, solvent-based PSA composition, hot-melt PSA composition and active energy ray-curing PSA composition. Here, the term "active energy ray" refers to an energy ray having energy capable of causing a chemical reaction such as polymerization, crosslinking and initiator decomposition, with the concept thereof encompassing lights such as UV rays, visible lights and infrared lights as well as radioactive rays such as α rays, β rays, γ rays, electron beam, neutron radiation and X rays. A PSA layer formed from a water-dispersed PSA composition is preferable because it is likely to reduce diffusion of the plasticizer in the PVC film into the PSA layer and inhibit temporal changes of adhesive strength, etc.

The PSA may comprise as its base polymer (the primary component among polymers) one, two or more species among various rubbery polymers known in the PSA field, such as rubber-based polymers, acrylic polymers, polyester-based polymers, urethane-based polymers, polyether-based polymers, silicone-based polymers, polyamide-based polymers and fluorine-based polymers. Here, the rubber-based PSA refers to a PSA that comprises a rubber-based polymer as the base polymer. The same applies to the acrylic PSA and other PSA. The acrylic polymer refers to a polymer that comprises a monomeric unit derived from an acrylic monomer (a monomer having at least one (meth)acryloyl group per molecule) and typically refers to a polymer that comprises a monomer unit derived from an acrylic monomer at a ratio above 50 % by weight. The (meth)acryloyl group comprehensively refers to the acryloyl group and methacryloyl group.

As the PSA layer of the PVC adhesive tape disclosed herein, from the standpoint of the low-temperature properties and a broad selection of adherends, a PSA layer comprising a rubber-based PSA as the primary component (i.e. a rubber-based PSA layer) can be preferably used. The rubber-based PSA may comprise one, two or more species of rubber-based polymer selected from natural and synthetic rubbers. In this description, the "primary component" refers to the highest component, typically a compound accounting for more than 50 % by weight unless otherwise indicated. As the rubber-based polymer, either natural rubber or synthetic rubber can be used. As the natural rubber, known materials usable in PSA compositions can be used. The concept of natural rubber referred to here is not limited to unmodified natural rubbers, encompassing modified natural rubbers that have been modified with, for instance, an acrylic acid ester, etc. Unmodified and modified natural rubbers may be used together. As the synthetic rubber, known materials that can be used in PSA compositions can be used. Favorable examples include styrene-butadiene rubber (SBR), styrene-isoprene rubber and chloroprene rubber. These synthetic rubbers can be unmodified or modified (e.g. carboxy-modified). For the rubber-based polymer, solely one species or a combination of two or more species can be used.

The PVC adhesive tape according to a preferable embodiment may have a rubber-based PSA layer formed from a water-dispersed rubber-based PSA composition obtained by adding a tackifier resin and other additives as necessary to rubber-based latex. The rubber-based latex can be a water dispersion of various known rubber-based polymers. Either natural rubber latex or synthetic rubber latex can be used. As the natural rubber latex, known materials that can be used in PSA compositions can be used. The concept of natural rubber latex referred to here is not unmodified natural rubber latexes, encompassing modified natural rubber latexes that have been modified with, for instance, an acrylic acid ester, etc. Unmodified and modified natural rubber latexes may be used together. As the synthetic rubber latex, known materials that can be used in PSA compositions can be used. Favorable examples include styrene-butadiene rubber latex (SBR latex), styrene-isoprene rubber latex and chloroprene rubber latex. These synthetic rubber latexes can be unmodified or modified (e.g. carboxy-modified). For the rubber-based latex, solely one species or a combination of two or more species can be used.

The rubber-based PSA composition (e.g. water-dispersed, rubber-based PSA composition) according to a preferable embodiment comprises both a natural rubber and synthetic rubber as the rubber-based polymer. With such a PSA composition, the PVC adhesive tape can be formed to show good adhesive properties. For instance, the PVC adhesive tape can be formed to show adhesive properties suited for applications such as protection and binding of electric wires, and pipes, covering of corrugated tubes as described above, and electric insulation. The natural rubber to synthetic rubber weight ratio (natural rubber:synthetic rubber) is preferably in a range of 10:90 to 90: 10, more preferably in a range of 20:80 to 80:20, or yet more preferably in a range of 30:70 to 70:30. As the synthetic rubber, SBR can be preferably used.

The PSA layer (typically a rubber-based PSA layer) in the art disclosed herein may comprise a tackifier resin in addition to the base polymer as described above. As the tackifier resin, a suitable species can be selected and used among various known tackifier resins. For example, one, two or more species can be used, selected from various tackifier resins including rosin-based resins, petroleum-based resins, terpene-based resins, phenolic resins, coumarone-indene-based resins and ketone-based resins.

Examples of rosin-based resins include rosin derivatives such as disproportionated rosins, hydrogenated rosins, polymerized rosins, maleinated rosins and fumarated rosins as well as phenol-modified rosins and rosin esters. Examples of phenol-modified rosins include products of addition reactions of natural rosins or rosin derivatives and phenols, and phenol-modified rosins obtainable by reactions of resolic phenol resins and natural rosins or rosin derivatives. Examples of rosin esters include esterified products of the rosin-based resins reacted with polyols. Rosin-phenol resins can be esterified as well.

Examples of terpene-based resins include terpene resins (α-pinene resins, β-pinene resins, limonene resins, etc.), terpene phenol resins, aromatically-modified terpene resins, and hydrogenated terpene resins.

Examples of petroleum-based resins include aliphatic (C5) petroleum resins, aromatic (C9) petroleum resins, aliphatic/aromatic copolymer-based (C5/C9) petroleum resins, hydrogenated products of these (e.g. alicyclic petroleum resins obtainable by hydrogenating aromatic petroleum resins) and various modified products thereof (e.g. maleic acid anhydride modified product).

Examples of phenolic resins include condensation products of formaldehyde and various phenols such as phenol, m-cresol, 3,5-xylenol, p-alkylphenol and resorcinol. Other examples of phenolic resins include resoles obtainable by base-catalyzed addition reactions of the phenols and formaldehyde, and novolacs obtainable by acid-catalyzed condensation reactions of the phenols and formaldehyde.

Examples of coumarone-indene-based resins include coumarone-indene resin, hydrogenated coumarone-indene resin, phenol-modified coumarone-indene resin and epoxy-modified coumarone-indene resin.

Examples of ketone resins include ketone resins formed by condensation of formaldehyde and ketones (e.g. aliphatic ketones such as methyl ethyl ketone and methyl isobutyl ketone; aromatic ketones such as acetophenone; and alicyclic ketones such as cyclohexanone and methyl cyclohexanone).

For instance, a tackifier resin having a softening point of 60 °C to 160 °C can be used. A tackifier resin that is in a liquid state at room temperature can be used as well. From the standpoint of combining cohesion and low-temperature properties (e.g. unwinding force and adhesive strength at low temperatures) at a good balance, a tackifier resin having a softening point of 60 °C to 140 °C (more preferably 80 °C to 120 °C) can be preferably used. For instance, a petroleum-based resin having a softening point in this range is preferably used. The softening point of a tackifier resin can be measured based on the softening point test method (ring and ball method) specified in JIS K2207.

The ratio of the polymers to the tackifier resin in the PSA layer can be suitably selected in accordance with the application. Based on non-volatiles, the tackifier resin content per 100 parts by weight of polymers can be, for instance, 20 parts by weight or greater, or it is usually suitably 50 parts by weight or greater. From the standpoint of obtaining greater effects of its use, the amount of the tackifier resin used to 100 parts by weight of polymers can be 80 parts by weight or greater, or even 100 parts by weight or greater. On the other hand, from the standpoint of the low-temperature properties, etc., the amount of the tackifier resin used to 100 parts by weight of polymers is suitably 200 parts by weight or less, or preferably 150 parts by weight or less.

As for other components, the PSA layer may comprise as necessary various additives generally used in the PSA field, such as viscosity modifier (thickener, etc.), leveling agent, plasticizer, softener, filler, colorant such as pigment and dye, photostabilizer, anti-aging agent, antioxidant, waterproofing agent, antistatic agent, foaming agent, anti-foaming agent, surfactant, preservative and crosslinking agent.

The PSA layer can be formed by suitably employing various heretofore known methods. For instance, it is possible to employ a direct method where a PSA composition is directly provided (typically applied) to a substrate (typically a PVC film) as described above and allowed to dry to form a PSA layer. A transfer method can also be used where a PSA composition is provided to a releasable surface (release face) and allowed to dry to form a PSA layer on the surface, and the PSA layer is transferred to a substrate. These methods can be combined as well. As the release face, a release liner surface, and the support substrate's back face treated with a release agent can be used.

The PSA composition can be applied with a known or commonly-used coater such as a gravure coater, reverse roll coater, kiss roll coater, dip roll coater, bar coater, knife coater and spray coater. The PSA layer is typically formed continuously. Depending on the purpose and application, it may be formed in a regular or random pattern of dots, stripes, etc.

In the art disclosed herein, the thickness of the PSA layer is usually suitably 100 µm or less (typically about 50 µm or less). From the standpoint of making the PVC adhesive tape thinner and lighter, the thickness of the PSA layer (typically a rubber-based PSA layer) can be, for instance, 30 µm or less, preferably 25 µm or less, or more preferably 20 µm or less (typically less than 20 µm, e.g. 18 µm or less). From the standpoint of obtaining suitable adhesive strength, the thickness of the PSA layer is usually suitably 3 µm or greater, or preferably 5 µm or greater (e.g. 7 µm or greater).

The art disclosed herein can be preferably implemented in an embodiment of the PVC adhesive tape wherein the PSA layer has a thickness of 5 µm or greater and less than 20 µm (typically 7 µm or greater and 18 µm or less, more preferably 10 µm or greater and 15 µm or less). For instance, the thickness range of the PSA layer is preferably applicable to PVC adhesive tape used for protecting and binding electric wires, and pipes; covering corrugated tubes as described earlier; electric insulation; and so on. In particular, in a PVC adhesive tape prepared into a PSA tape roll described later with a support substrate having a thickness less than 100 µm (e.g. less than 90 µm), from the standpoint of adjusting its unwinding force, it is advantageous that the PSA layer has a thickness in these ranges.

### <PSA Tape>

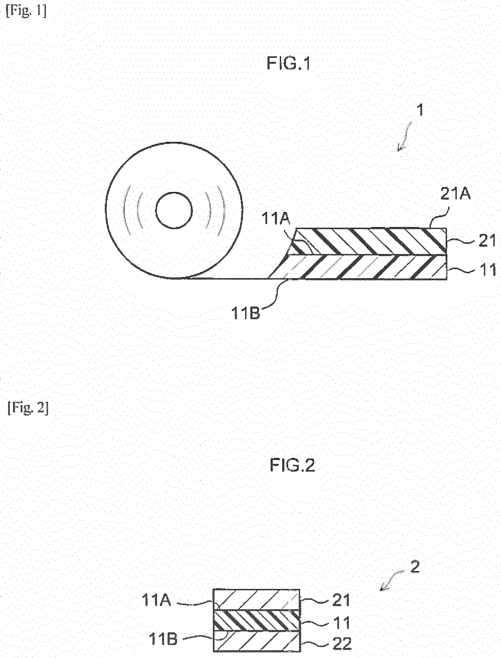

Fig. 1 shows a configurational example of the PSA tape disclosed herein. PVC adhesive tape 1 shown in Fig. 1 is constituted as a single-faced PSA tape that comprises a support substrate (e.g. a single-layer PVC film) 11 having a first face 11A and a second face 11B, and a PSA layer 21 placed on the first face 11A. In a preferable embodiment, for instance, as shown in Fig. 1, PSA tape 1 before used (i.e. before adhered to adherend) may be in a PSA tape roll form where it is wound in the length direction so that the second face 11B of the support substrate is in contact with the PSA layer 21 to protect its surface (adhesive face) 21A. Alternatively, it may be in a form where the surface 21A of the PSA layer 21 is protected with a release liner having a release face at least on the side that faces the PSA layer 21. As the release liner, a known or commonly-used release liner can be used. For instance, can be used a release liner having a release layer on a surface of a substrate such as plastic film and paper, a release liner formed from a low adhesive material such as fluorine-based polymers (polytetrafluoroethylene, etc.) and polyolefin-based resins (polyethylene, polypropylene).

Fig. 2 shows another configurational example of the PSA tape disclosed herein. PSA tape 2 shown in Fig. 2 is constituted as a double-faced PSA tape having a first PSA layer 21 and a second PSA layer 22 placed on the first face 11A and second face 11B of support substrate (e.g. a single-layer PVC film) 11, respectively. The art disclosed herein can be preferably implemented also in an embodiment of such a double-faced PSA tape.

The PSA tape disclosed herein is characterized by having a low-temperature tensile elongation at break (a tensile elongation at break at -20 °C) of 80 % or higher when determined by the method described later in Examples. The PVC adhesive tape having such a property is highly flexible (extensible) even at low temperatures and thus, may exhibit good low-temperature properties. For instance, in an application where it is wound around electric wires in a wire harness, such a PVC adhesive tape may favorably prevent cracking at low temperatures. From the standpoint of obtaining greater low-temperature properties, a preferable PVC adhesive tape has a low-temperature tensile elongation at break of 100 % or higher (more preferably 110 % or higher, e.g. 120 % or higher). From the standpoint of the handling properties, the low-temperature tensile elongation at break is usually suitably 300 % or lower, or preferably 200 % or lower (e.g. 170 % or lower). The art disclosed herein can be preferably implemented, for instance, in an embodiment where the low-temperature tensile elongation at break is 100 % to 200 % (preferably 110 % to 170 %).

The overall thickness (the combined thickness of the support substrate and the PSA layer) of the PVC adhesive tape is not particularly limited. From the standpoint of making the PVC adhesive tape thinner and lighter, the art disclosed herein can be preferably implemented in an embodiment where the overall thickness of the PVC adhesive tape is less than 120 µm (more preferably less than 110 µm, or yet more preferably less than 100 µm, e.g. less than 90 µm). From the standpoint of the crack resistance at low temperatures, the thickness of the PVC adhesive tape is suitably 55 µm or greater, or usually preferably 60 µm or greater (more preferably 70 µm or greater, or yet more preferably 75 µm or greater, e.g. 80 µm or greater).

From the standpoint of reducing the weight of the PVC adhesive tape, the art disclosed herein can be implemented in an embodiment where the PVC adhesive tape has a grammage of 100 g/m² or less, preferably 90 g/m² or less. From the standpoint of the crack resistance at low temperatures, the grammage of the PVC adhesive tape is suitably 55 g/m² or greater, or usually preferably 60 g/m² or greater (more preferably 70 g/m² or greater, or yet more preferably 75 g/m² or greater, e.g. 80 g/m² or greater).

In the art disclosed herein, the width of the PVC adhesive tape can be suitably selected in accordance with the purpose and the application. The PVC adhesive tape may have a width of, for instance, 5 mm to 55 mm, usually 10 mm to 40 mm, or preferably 15 mm to 30 mm (typically 15 mm to 25 mm). In the PVC adhesive tape having such a width, the effects of this invention can be favorably obtained. The art disclosed herein can be preferably practiced as a PSA tape roll where the PVC adhesive tape of 19 mm in width is wound in a roll.

From the standpoint of the ease of winding, it is advantageous that the PSA tape roll has a diameter not excessively large. From such a standpoint, the diameter of the PSA tape roll is usually suitably 20 cm or less (typically 5 cm to 20 cm). The art disclosed herein can be favorably implemented as a PSA tape roll having a diameter in a range of 15 cm or less (e.g. 5 cm to 15 cm).

### <Applications>

The PSA tape disclosed herein has excellent crack resistance at low temperatures and thus can be used in various fields that require low-temperature properties. For instance, it is favorable for applications such as protecting and binding of electric wires, and pipes; covering of corrugated tubes that wrap and protect electric wires; electric insulation; and so on. A particularly preferable application is wrapping of an electric wire (typically a plurality of electric wires) constituting a wire harness (e.g. wire harnesses for automobiles and other vehicles, especially wire harnesses for vehicles comprising internal combustion engines, etc.). Here, examples of the embodiment of the PVC adhesive tape wrapped around electric wires forming a wire harness include an embodiment of the PVC adhesive tape wrapped around the electric wires and an embodiment of the PVC adhesive tape wrapped around a tube (e.g. corrugated tube) housing the electric wires. The PSA tape disclosed herein can be favorably used in various fields where PVC adhesive tapes are used, for instance, in fields including interlayer and outer surface insulation, attachment, labeling and identification of electric parts (transformers, coils, etc.), and electronic components.

### [Examples]

Several working examples relating to the present invention are described below. In the description below, "parts" and "%" are based on weight unless otherwise specified.

### <Materials Used>

The materials used in Examples below are abbreviated as follows:

### (Aliphatic acid metal salts)

A1: calcium stearate (product of Kishida Chemical Co., Ltd.)
A2: calcium laurate (product of Kishida Chemical Co., Ltd.)

### (plasticizers)

B1: isononyl phthalate (product of J-Plus Co., Ltd., trade name DINP 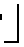 )
B2: bis(2-ethylhexyl) terephthalate (product of J-Plus Co., Ltd., product name DOTP)

### (Elastomers)

E1: product of Kaneka Corporation, (meth)acrylic acid ester-butadiene-styrene copolymer, product name KANE ACE B22 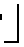
E2: product of Zeon Corporation, acrylonitrile-butadiene copolymer, 31-36 % acrylonitrile, product name NIPOL 1052J
E3: product of JSR Corporation, acrylonitrile-butadiene copolymer, 41.5 % acrylonitrile, grade name PN20HA
E4: product of Nippon Synthetic Chemical Industry Co., Ltd., ethylene-vinyl acetate copolymer, product name SOARBLEN BH
E5: product of Showa Denko K.K., chlorinated polyethylene, 38.0-41.0 % chlorine, product name ELASLENE 401A
E6: product of Kaneka Corporation, vinyl chloride-vinyl acetate copolymer, 5 % vinyl acetate, product name KANE VINYL M1008
E7: product of JSR Corporation, styrene-butadiene block copolymer, linear structure, 40 % styrene, grade name TR2000

### <Fabrication of PSA Tape>

### (Example 1)

Based on solid content, were mixed 60 parts of an SBR latex (available from Zeon Corporation, product name "NIPOL LX426"), 40 parts of a natural rubber latex (available from Golden Hope, product name "HYTEX HA") and 120 parts of a petroleum resin emulsion to prepare a water-dispersed rubber-based PSA composition. To prepare the petroleum resin emulsion, was dissolved 75 parts of a petroleum resin (available from Exxon, aliphatic acid-based hydrocarbon resin, product name "ESCOREZ 1202" ,softening point 100 °C) in 25 parts of toluene; to the resultant, were added 3.5 parts of a surfactant (available from Kao Corporation, product name "EMULGEN 920") and 46.5 parts of water; and the mixture was stirred and emulsified with a homo-mixer. The resulting PSA composition is referred to as "PSA composition A" hereinafter.

The respective starting materials shown in Table 1 were weighed out and mixed together to form the composition shown in the same table (i.e. the composition with 0.10 % aliphatic acid metal salt A1, 25 % plasticizer B1 and 6 % elastomer E1 and the rest being PVC). After kneaded, with a calender molding machine, at a molding temperature of 150 °C, the mixture was molded into a long film of 70 µm thickness. PVC film (support substrate) according to Example 1 was thus obtained. Here, as the PVC shown in Table 1, was used a polyvinyl chloride having an average degree of polymerization of 1000 (product of Shin-Etsu Chemical Co., Ltd., product name TK-1000).

Using a comma direct coater, to a surface of the PVC film, the PSA composition A was applied, dried and wound over a length sufficient for conducting the low-temperature winding test described later. The coating amount of PSA composition A was adjusted to form a PSA layer with the thickness shown in Table 1 after dried. This was slit to a width of 19 mm to obtain a PSA tape according to Example 1.

### (Examples 2-8 and Comparative Examples 1-3)

The compositions of the PVC film (support substrate) and the thicknesses of the PSA layers used were as shown in Table 1. Otherwise in the same manner as Example 1, were fabricated PSA tapes according to Examples 2 to 8 and Comparative Examples 1 to 3.

The PVC films according to the respective Examples were stretched in the machine direction (MD) to double the lengths and their appearances were visually inspected. The PVC films of Examples 1 to 5 and Comparative Example 3 were all transparent. The presence of some clouding was observed in the PVC films of Example 6 and Comparative Examples 1 and 2.

### <Measurements and Evaluations>

### (Determination of dynamic viscosity)

The dynamic viscosity was determined based on the flow test in JIS K 7210 (2009). In particular, using a flow tester (capillary rheometer) CFT-500D/100D available from Shimadzu Corporation, the PVC film as a test sample was placed and melted in a piston of 1 cm³ in volume set at 160 °C. While the melted PVC was extruded from a die (1 mm in pore diameter (D), 1 mm in length (L)) under a load (P) of 40 MPa, the flow rate (Q) was determined. From the flow rate Q, the dynamic viscosity (in Pa·s) was determined.

### (Determination of low-temperature tensile elongation at break)

The PSA tape according to each Example was cut to a 10 mm wide by 100 mm long size to prepare a test sample. Based on the test method of "Plastics- Tensile properties" in JIS K 7161, at -20 °C, the tensile elongation at break was determined. The tester used and the test conditions are as follows:
Tester: tensile tester (available from Shimadzu Corporation, Autograph AG-20kNG)
Test conditions: chuck distance of 50 mm, tensile speed of 300 mm/min
Under the conditions shown above, each test sample was pulled in the length direction. From the chuck distance X (mm) when the sample broke, the low-temperature tensile elongation at break was determined by the next equation: tensile elongation at break (%) = (X - 50)/50 × 100.

### (Low-Temperature Winding Test)

Ten AVSS 0.5 and four AVSS 0.85 thin low-voltage wires for automobiles (available from Sumitomo Wiring Systems, Ltd.) were obtained, each cut to 600 mm in length. These 14 electric wires were bundled together and bound with PSA tape at both ends of the length direction to facilitate winding. Subsequently, the PSA tape (19 mm width) according to each Example was wound around the electric wires in the half lap manner to fabricate a test sample. The half lap manner here refers to a way of winding where the PSA tape is wound so that each tum overlaps the previous tum by one-half the width of the PSA tape. The test sample was placed in a glove box (product of Espec Corporation, WU-200) at -20 °C and stored for one hour. Subsequently, in the glove box, the test sample was wound around a steel rod of 80 mm diameter to conform to the circumference. While keeping this state, the test sample was visually inspected whether a clack was generated in its PSA tape (the PSA tape wound laterally around bound electric wires in the half lap manner) when the test sample was wound on the steel rod circumference or within 30 minutes after the wound.

Table 1 shows the results of the inspection as "winding test at -20 °C" on the following three-grade scale.
E: No cracking observed (low-temperature crack resistance: excellent)
G: Slight cracking observed, but with no exposure of the outer surface of bound electric wires (low-temperature crack resistance: good)
P: Cracking observed exposing the outer surface of the bound electric wires (low-temperature crack resistance: poor)

The results are shown in Table 1 along with summarized features of the PSA tapes according to the respective Examples.

### [Table 1]

**Table 1**

| | | | Example | | | | | | | | Comparative Ex. | | |
|---|---|---|---|---|---|---|---|---|---|---|---|---|---|
| | | | 1 | 2 | 3 | 4 | 5 | 6 | 7 | 8 | 1 | 2 | 3 |
| Thickness (µm) | Support substrate PSA layer | | 70 | 70 | 70 | 70 | 70 | 70 | 70 | 70 | 70 | 70 | 70 |
| | | | 13 | 13 | 13 | 15 | 15 | 10 | 13 | 20 | 13 | 10 | 13 |
| Substrate composition (wt%) | PVC | | Rest | Rest | Rest | Rest | Rest | Rest | Rest | Rest | Rest | Rest | Rest |
| | Aliphatic acid metal salt | A1 | 0.10 | 0.20 | - | 0.10 | 0.10 | 0.10 | 0.15 | 0.20 | 0.20 | - | 0.30 |
| | | A2 | - | - | 0.15 | - | - | - | - | - | - | 0.30 | - |
| | Plasticizer | B1 | 25 | 25 | 25 | 25 | 25 | 18 | - | 25 | 25 | 25 | 27 |
| | | B2 | - | - | - | - | - | - | 25 | - | - | - | - |
| | Elastomer | E1 | 6 | - | - | - | - | - | 6 | - | - | - | - |
| | | E2 | - | 6 | - | - | - | - | - | 6 | - | - | - |
| | | E3 | - | - | 6 | - | - | - | - | - | - | - | - |
| | | E4 | - | - | - | 6 | - | - | - | - | - | - | - |
| | | E5 | - | - | - | - | 6 | 28 | - | - | - | - | - |
| | | E6 | - | - | - | - | - | - | - | - | 6 | - | - |
| | | E7 | - | - | - | - | - | - | - | - | - | 6 | - |
| PSA tape | Plasticizer (wt%) | | 22 | 22 | 22 | 20 | 20 | 17 | 23 | 22 | 23 | 24 | 25 |
| | Grammage (g/m²) | | 88 | 89 | 88 | 89 | 88 | 91 | 89 | 88 | 89 | 87 | 90 |
| Dynamic viscosity (Pa ˙ s) | | | 2260 | 2480 | 2564 | 2260 | 2673 | 1674 | 2450 | 2480 | 3129 | 3769 | 3460 |
| Tensile elongation at break at -20 °C (%) | | | 114 | 147 | 110 | 120 | 107 | 138 | 108 | 147 | 24 | 49 | 69 |
| Winding test at -20 °C | | | E | E | G | E | G | E | E | E | P | P | P |

As shown in Table 1, the PSA tapes of Examples 1 to 8 with 80 % or higher low-temperature tensile elongation at break showed clearly greater crack resistance in the low-temperature winding test (at -20 °C, here) as compared to the PSA tapes of Comparative Examples 1 to 3. The PSA tapes of Examples 1, 2, 4, and 6 to 8 showed particularly high low-temperature crack resistance.

It is noted that when, in the PSA tape of Example 8, the plasticizer B1 content and the elastomer E2 content in the PVC film were changed to 22 % and 18 % by weight, respectively, the resulting PSA tape exhibited a low-temperature tensile elongation at break of 125 % and showed excellent crack resistance in the low-temperature winding test.

Although specific embodiments of the present invention have been described in detail above, these are merely for illustrations. The art according to the claims includes various modifications and changes made to the specific embodiments illustrated above.

### [Reference Signs List]

1, 2 PVC adhesive tapes (PSA tapes)
11 support substrate
11A first face
11B second face
21, 22 PSA layer
21A surface (adhesive face)

## Claims

1. A pressure-sensitive adhesive tape comprising
a polyvinyl chloride film, wherein the polyvinyl chloride film comprises an elastomer, wherein the elastomer comprises one, two or more species selected among a chlorinated polyethylene, a (meth)acrylic acid ester-butadiene-styrene copolymer, an acrylonitrile-butadiene copolymer, and an ethylene-vinyl acetate copolymer; and wherein the polyvinyl chloride film comprises an aliphatic acid metal salt, wherein the aliphatic acid metal salt content in the polyvinyl chloride film is 0.01% or higher and 0.3% or lower by weight, and wherein the metal forming the aliphatic acid metal salt is selected from the group consisting of Ca and Zn; and
a pressure-sensitive adhesive layer placed on at least one face of the polyvinyl chloride film,
with the pressure-sensitive adhesive tape having a tensile elongation at break at -20 °C of 80 % or higher determined as described in the specification,
wherein the pressure-sensitive adhesive layer is formed from a water-dispersed pressure-sensitive adhesive composition,
wherein the pressure-sensitive adhesive tape has a grammage of 100 g/m² or less, and
wherein the polyvinylchloride film comprises a plasticizer, with the plasticizer accounting for 15% or higher and 35% or lower by weight.

2. The pressure-sensitive adhesive tape according to claim 1, wherein the polyvinyl chloride film is formed of a resin material having a dynamic viscosity of 3000 Pa·s or less determined as described in the specification.

3. The pressure-sensitive adhesive tape according to claim 1 or 2, wherein the polyvinyl chloride film had a thickness of 100 µm or less.

4. The pressure-sensitive adhesive tape according to claim 1, wherein the elastomer content in the polyvinyl chloride film is 1 % or higher and 30 % or lower by weight.

5. The pressure-sensitive adhesive tape according to claim 1, wherein the plasticizer comprises one, two or more species selected among a benzoic acid ester, a phthalic acid ester, a terephthalic acid ester, a trimellitic acid ester, a pyromellitic acid ester, an adipic acid ester, a sebacic acid ester, an azelaic acid ester, a maleic acid ester and a citric acid ester.

6. The pressure-sensitive adhesive tape according to claim 1, wherein the aliphatic acid metal salt is a metal stearate, a metal laurate, or a combination of a metal laurate and a metal stearate.

7. The pressure-sensitive adhesive tape according to any one of claims 1 to 6, wherein the pressure-sensitive adhesive layer is formed of a pressure-sensitive adhesive selected among a rubber-based pressure-sensitive adhesive, a polyester-based pressure-sensitive adhesive, a urethane-based pressure-sensitive adhesive, a polyether-based pressure-sensitive adhesive, and a silicone-based pressure-sensitive adhesive.

8. The pressure-sensitive adhesive tape according to any one of claims 1 to 7, wherein the pressure-sensitive adhesive layer is a rubber-based pressure-sensitive adhesive layer comprising a rubber-based pressure-sensitive adhesive as its primary component.

9. A wire harness comprising electric wires and the pressure-sensitive adhesive tape according to any one of claims 1 to 8, wrapped around the electric wires.

## Patentansprüche

1. Haftklebeband, umfassend
eine Polyvinylchloridfolie, wobei die Polyvinylchloridfolie ein Elastomer umfasst, wobei das Elastomer eine, zwei oder mehrere Arten umfasst, ausgewählt aus chloriertem Polyethylen, einem (Meth)acrylsäureester-Butadien-Styrol-Copolymer, einem Acrylnitril-Butadien-Copolymer und einem Ethylen-Vinylacetat-Copolymer; und wobei die Polyvinylchloridfolie ein aliphatisches Säuremetallsalz umfasst, wobei der Gehalt an aliphatischem Säuremetallsalz in der Polyvinylchloridfolie 0,01 Gew.-% oder mehr und 0,3 Gew.-% oder weniger beträgt und wobei das Metall, das das aliphatische Säuremetallsalz bildet, ausgewählt ist aus der Gruppe bestehend aus Ca und Zn; und
eine Haftklebeschicht, die auf mindestens einer Seite der Polyvinylchloridfolie aufgebracht ist,
wobei das Haftklebeband eine Bruchdehnung bei -20 °C von 80 % oder mehr aufweist, bestimmt wie in der Beschreibung angegeben,
wobei die Haftklebeschicht aus einer wasserdispergierten Haftklebezusammensetzung gebildet ist,
wobei das Haftklebeband ein Flächengewicht von 100 g/m² oder weniger aufweist, und
wobei die Polyvinylchloridfolie einen Weichmacher umfasst, wobei der Weichmacher 15 Gew.-% oder mehr und 35 Gew.-% oder weniger ausmacht.

2. Haftklebeband gemäß Anspruch 1, wobei die Polyvinylchloridfolie aus einem Harzmaterial mit einer dynamischen Viskosität von 3000 Pa·s oder weniger gebildet ist, bestimmt wie in der Beschreibung angegeben.

3. Haftklebeband gemäß Anspruch 1 oder 2, wobei die Polyvinylchloridfolie eine Dicke von 100 µm oder weniger aufweist.

4. Haftklebeband gemäß Anspruch 1, wobei der Elastomergehalt in der Polyvinylchloridfolie 1 Gew.-% oder mehr und 30 Gew.-% oder weniger beträgt.

5. Haftklebeband gemäß Anspruch 1, wobei der Weichmacher eine, zwei oder mehrere Arten umfasst, ausgewählt aus einem Benzoesäureester, einem Phthalsäureester, einem Terephthalsäureester, einem Trimellitsäureester, einem Pyromellitsäureester, einem Adipinsäureester, einem Sebacinsäureester, einem Azelainsäureester, einem Maleinsäureester und einem Zitronensäureester.

6. Haftklebeband gemäß Anspruch 1, wobei das aliphatische Säuremetallsalz ein Metallstearat, ein Metalllaurat oder eine Kombination aus einem Metalllaurat und einem Metallstearat ist.

7. Haftklebeband gemäß einem der Ansprüche 1 bis 6, wobei die Haftklebeschicht aus einem Haftklebstoff gebildet ist, ausgewählt aus einem Haftklebstoff auf Kautschukbasis, einem Haftklebstoff auf Polyesterbasis, einem Haftklebstoff auf Urethanbasis, einem Haftklebstoff auf Polyetherbasis und einem Haftklebstoff auf Silikonbasis.

8. Haftklebeband gemäß einem der Ansprüche 1 bis 7, wobei die Haftklebeschicht eine Haftklebeschicht auf Kautschukbasis ist, umfassend einen Haftklebstoff auf Kautschukbasis als Hauptbestandteil.

9. Kabelbaum, umfassend elektrische Drähte und das Haftklebeband gemäß einem der Ansprüche 1 bis 8, das um die elektrischen Drähte gewickelt ist.

## Revendications

1. Ruban adhésif sensible à la pression comprenant
un film de poly(chlorure de vinyle), le film de poly(chlorure de vinyle) comprenant un élastomère, l'élastomère comprenant une ou deux espèces ou plus choisies parmi un polyéthylène chloré, un copolymère ester d'acide (méth)acrylique-butadiène-styrène, un copolymère acrylonitrile-butadiène et un copolymère éthylène-acétate de vinyle ; et le film de poly(chlorure de vinyle) comprenant un sel métallique d'un acide aliphatique, la teneur en sel métallique d'acide aliphatique dans le film de poly(chlorure de vinyle) étant supérieure ou égale à 0,01 % et inférieure ou égale à 0,3 % en poids, et le métal formant le sel métallique d'acide aliphatique étant choisi dans le groupe constitué par Ca et Zn ; et
une couche d'adhésif sensible à la pression placée sur au moins une face du film de poly(chlorure de vinyle),
le ruban adhésif sensible à la pression ayant un allongement à la rupture en traction à -20 °C supérieur ou égal à 80 % déterminé tel que décrit dans la description,
la couche d'adhésif sensible à la pression étant formée à partir d'une composition d'adhésif sensible à la pression dispersée dans de l'eau,
le ruban adhésif sensible à la pression ayant un grammage inférieur ou égal à 100 g/m², et
le film de poly(chlorure de vinyle) comprenant un plastifiant, le plastifiant représentant 15 % ou plus et 35 % ou moins en poids.

2. Ruban adhésif sensible à la pression selon la revendication 1, le film de poly(chlorure de vinyle) étant formé d'un matériau de résine ayant une viscosité dynamique inférieure ou égale à 3 000 Pa·s déterminée tel que décrit dans la description.

3. Ruban adhésif sensible à la pression selon la revendication 1 ou 2, le film de poly(chlorure de vinyle) ayant une épaisseur inférieure ou égale à 100 µm.

4. Ruban adhésif sensible à la pression selon la revendication 1, la teneur en élastomère dans le film de poly(chlorure de vinyle) étant supérieure ou égale à 1 % et inférieure ou égale à 30 % en poids.

5. Ruban adhésif sensible à la pression selon la revendication 1, le plastifiant comprenant une ou deux espèces ou plus choisies parmi un ester d'acide benzoïque, un ester d'acide phtalique, un ester d'acide téréphtalique, un ester d'acide trimellitique, un ester d'acide pyromellitique, un ester d'acide adipique, un ester d'acide sébacique, un ester d'acide azélaïque, un ester d'acide maléique et un ester d'acide citrique.

6. Ruban adhésif sensible à la pression selon la revendication 1, le sel métallique d'acide aliphatique étant un stéarate métallique, un laurate métallique, ou une combinaison d'un laurate métallique et d'un stéarate métallique.

7. Ruban adhésif sensible à la pression selon l'une quelconque des revendications 1 à 6, la couche d'adhésif sensible à la pression étant formée d'un adhésif sensible à la pression choisi parmi un adhésif sensible à la pression à base de caoutchouc, un adhésif sensible à la pression à base de polyester, un adhésif sensible à la pression à base d'uréthane, un adhésif sensible à la pression à base de polyéther et un adhésif sensible à la pression à base de silicone.

8. Ruban adhésif sensible à la pression selon l'une quelconque des revendications 1 à 7, la couche d'adhésif sensible à la pression étant une couche d'adhésif sensible à la pression à base de caoutchouc comprenant un adhésif sensible à la pression à base de caoutchouc en tant que constituant principal.

9. Faisceau de câbles comprenant des fils électriques et le ruban adhésif sensible à la pression selon l'une quelconque des revendications 1 à 8, entouré autour des fils électriques.
